# EUROPÄISCHE PATENTANMELDUNG

(11) **EP 0 892 206 A2**
(43) Veröffentlichungstag der Anmeldung: **20.01.1999**
(21) Anmeldenummer: 98110650.3
(22) Anmeldetag: 10.06.1998
(51) Int. Cl.: F16L 33/02, B65D 63/10

(54) **Kunststoffschelle zum Einspannen zylinderdrischer Elemente**

(30) Priorität: 18.07.1997 DE 19730808
(71) Anmelder: Jeschke, Immanuel, 31157 Sarstedt OT Heisede (DE)
(72) Erfinder: Jeschke, Immanuel, 31157 Sarstedt OT Heisede (DE)
(74) Vertreter: Patentanwälte Thömen & Körner

(57) **Zusammenfassung**

Es ist eine Kunststoffschelle zum Einspannen zylindrischer Elemente, insbesondere von Rohren und dergleichen, mit einem Schellenband mit einer quer zum Schellenband auf dem Schellenband angeordneten Verzahnung, wobei die Verzahnung aus einer an einem Endes des Schellenbandes angeordneten Verzahnung und aus einer am anderen Ende des Schellenbandes angeordneten unteren Verzahnung besteht, wobei das Schellenband an seinen Außenkanten im Bereich einer Verzahnung mit die Verzahnung überragenden, längs zum Schellenband verlaufenden Flanschen versehen ist, und mit einem Schloß zur Sicherung der Verbindung von Innen- und Außenverzahnung, durch welche die Verzahnung festlegbar ist, offenbart. Die Kunststoffschelle ist dadurch gekennzeichnet, daß beide Enden des Schellenbandes an ihren Außenkanten im Bereich der oberen Verzahnung und der unteren Verzahnung mit Flanschen versehen sind, welche sich nach oben erstrecken, wobei der äußere Abstand der Flansche an einem Ende des Schellenbandes dem inneren Abstand der Flansche am anderen Ende des Schellenbandes entspricht und wobei die Flansche beider Enden miteinander verschweißbar sind. Alternativ ist es möglich, daß das Schloß aus einer sich quer zum Schellenband erstreckenden Lasche besteht, welche außerhalb, neben und parallel zur Verzahnung und außerhalb der Flansche am Schellenband angebracht ist, wobei die Lasche die Verzahnung in Radialrichtung sichert und wobei die Lasche quer um das Schellenband geführt ist.

## Beschreibung

Die Erfindung betrifft eine Kunststoffschelle zum Einspannen zylindrischer Elemente, insbesondere von Rohren und dergleichen, mit den Merkmalen des Oberbegriffs des Patentanspruchs 1.

Derartige Kunststoffschellen, wie sie beispielsweise aus der DE-PS 29 27 897 bekannt sind, dienen dazu, zwei Rohre so miteinander zu verbinden, daß die Rohre nach dem Verbinden durch die Kunststoffschelle in ein Mantelrohr eingeführt werden können. Diese Verbindungsart wird insbesondere bei Rohren verwandt, welche nach Fertigstellung der Verbindung Erdgas zur Haushaltsbefeuerung führen. Das Problem bei der Verbindung derartiger Rohre, welche Gas führen, ist daran zu sehen, daß die Verbindung der zwei Rohre absolut gasdicht sein muß. Eine Verbindung mit bislang bekannten Kunststoffschellen ist insofern problematisch, als daß die um die Rohre geführten Kunststoffschellen so dick sind, daß ein Einführen der miteinander verbundenen Rohre in ein Mantelrohr nur schwer möglich ist. Insbesondere ist es bei bisher bekannten Kunststoffschellen problematisch, daß das Schloß, welches die Verbindung der Kunststoffschelle sichert, in der Regel wesentlich dicker ist als die einander überlappenden Enden der Kunststoffschelle. Eine gleichmäßige Dicke der Kunststoffschelle ist aber insbesondere bei der Verbindung von Gasleitungen wichtig, da zur Sicherung der Dichtigkeit der durch die Kunststoffschelle verbundenen Rohre auch dadurch gewährleistet sein muß, daß die Kunststoffschelle gleichmäßig um die miteinander zu verbindenen Rohre anliegt und gleichzeitig um ihren gesamten Umfang gleichmäßig gegen das die Rohre umgebende Mantelrohr anliegen muß. Eine solche gleichmäßige AnLage gegen die Rohre bzw. gegen das Mantelrohr ist mit den bisher bekannten Kunststoffschellen nicht zu erzielen.

Aufgabe der Erfindung ist es daher, eine Kunststoffschelle der eingangs genannten Art zu schaffen, welche gleichmäßig gegen die zu verbindenden Rohre und gleichmäßig gegen das die Rohre umgebende Mantelrohr anliegt und welche eine unlösbare Bindung der Kunststoffschelle ermöglicht.

Diese Aufgabe wird mit einer Kunststoffschelle der eingangs genannten Art gelöst, welche die Merkmale des kennzeichnenden Teils des Patentanspruchs 1 oder des kennzeichnenden Teils des Patentanspruchs 3 aufweist.

In einer ersten Ausführungsform sind bei einer erfindungsgemäßen Kunststoffschelle beide Enden des Schellenbandes an ihren Außenkanten im Bereich der oberen Verzahnung und der unteren Verzahnung mit Flanschen versehen, welche sich nach oben erstrecken, wobei der äußere Abstand der Flansche an einem Ende des Schellenbandes dem inneren Abstand der Flansche am anderen Ende des Schellenbandes entspricht und wobei die Flansche beider Enden miteinander verschweißbar sind.

Durch diese Flansche wird eine Kunststoffschelle geschaffen, die so eng wie möglich an den miteinander zu verbindenen Rohren anliegt und die ebenso eng wie möglich an dem die miteinander zu verbindenden Rohre umgebenden Mantelrohr anliegt. Das Schloß besteht bei einer derartigen Kunststoffschelle aus den miteinander verschweißten Flanschen, deren Dicke so gewählt ist, daß in Umfangsrichtung der Kunststoffschelle eine möglichst gleichmäßige Dicke der Kunststoffschelle gewährleistet ist. Es entsteht hierbei also nicht ein aus dem Stand der Technik bekanntes Schloß, das deutlich dicker ist als der Rest der Kunststoffschelle und hierbei eine nicht hinnehmbare Erhöhung der Kunststoffschelle darstellt. Da die Verbindung der Kunststoffschelle dauerhaft erfolgen soll, ist es auch nicht nötig, das Schloß lösbar auszuführen. Wenn die Flansche miteinander verschweißt werden, reicht diese Art der Verbindung aus, um eine dauerhaft Sicherung der Verbindung der beiden Enden der Kunststoffschelle zu sichern. Die Flansche sorgen zudem dafür, daß ein seitliches Verschieben der überlappenden Enden der Kunststoffschelle vor dem Ausführen der Verschweißung verhindert wird. Bei der ersten Ausführungsform der Kunststoffschelle ist es ausreichend, wenn die beiden Enden der Kunststoffschelle übereinander gelegt und unter Druck festgezogen werden; anschließend werden die Flansche der beiden Enden miteinander verschweißt.

In einer bevorzugten Ausführungsform der ersten Ausgestaltung der Kunststoffschelle fluchten obere Kanten der Flansche im verspannten Zustand der Kunststoffschelle miteinander.

Bei einer zweiten Ausführungsform der erfindungsgemäßen Kunststoffschelle besteht das Schloß aus einer sich quer zum Schellenband erstreckenden Lasche, welche außerhalb, neben und parallel zur Verzahnung und außerhalb des Randes am Schellenband angebracht ist, wobei die Lasche die Verzahnung in Radialrichtung sichert und wobei die Lasche quer um das Schellenband geführt ist. Bei dieser Ausgestaltung der erfindungsgemäßen Kunststoffschelle ist also das Schloß eine um das Schellenband geführte Lasche, welche neben der Verzahnung das im verspannten Zustand obere Ende des Schellenbandes gegen das untere Ende des Schellenbandes drückt und durch diesen Druck den Eingriff der beiden Verzahnungen sichert. Vorteilhaft an dieser Ausgestaltung ist, daß die Lasche neben der Verzahnung angebracht ist, d.h. daß die Lasche nicht direkt auf den Verzahnungsbereich drückt, sondern an einem Ort angebracht ist, wo das Schellenband dünner ausgeführt sein kann. Denn übliche Schellenschlösser wirken direkt auf den Bereich der Verzahnung ein, d.h. sie sind über der Verzahnung angebracht, an einer Stelle also, wo das Schellenband mit den beiden sich überlappenden Enden dicker ausgeführt ist.

Das als Lasche ausgeführte Schloß kann allein die Verzahnung sichern oder als zusätzliche Sicherung beim Verschweißen der Flansche miteinander dienen. Dies kann insbesondere dann wünschenswert sein, wenn durch die Materialeigenschaften der Kusntstoffschelle bedingt eine Fließen des Kunststoffs der Schelle im Bereich der Verschweißung zu befürchten ist.

Bevorzugterweise ist die Lasche mit mindestens einem Steg versehen, welcher sich in Längsrichtung der Lasche und quer zum Schellenband erstreckt und welcher im Spannzustand der Lasche über dem Schellenband angeordnet ist. Bei dieser Ausgestaltung drückt mindestens ein Steg auf das im Spannzustand obere Ende des Schellenbandes. Der Druck von mindestens einem Steg ist dabei ausreichend, um die Verzahnung zu sichern.

Vorteilhafterweise ist die Lasche an ihrer Oberseite mit einer quer zur Lasche verlaufenden Verzahnung versehen, welche im Spannzustand der Lasche mit einer an der Unterseite des Schellenbandes längs zum Schellenband verlaufenden Verzahnung in Eingriff ist. Diese Verzahnung dient der Fixierung der Lasche an der Unterseite des Schellenbandes.

Bevorzugterweise ist die Lasche durch ein Filmscharnier mit dem Schellenband verbunden. Dieses Filmscharnier gestattet auf leichte Weise ein Abwinkeln der Lasche, um die Lasche um das Schellenband herumzuführen.

Es kann vorteilhaft sein, wenn die Lasche lösbar mit dem Schellenband verbunden ist. Dies kann insbesondere dann vorteilhaft sein, wenn die Lasche nur im Bedarfsfalle eingesetzt werden soll, d.h. wenn eine Verbindung der beiden Enden des Schellenbandes mittels Verschweißung nicht ausreichend ist. Bei dieser Ausgestaltung kann es vorteilhaft sein, wenn die Lasche an einem Ende mit einem Haken versehen ist, welcher in einen an einer Außenkante des Schellenbandes angeformten Haken eingreift. Alternativ ist es möglich, daß ein Ende der Lasche einen Schwalbenschwanz aufweist, welcher in eine an einer Außenkante des Schellenbandes angeformte schwalbenschwanzförmige Ausnehmung eingreift.

Vorteilhafterweise ist die Lasche an ihrer Oberseite mit mindestens einem Haken versehen, welcher im Spannzustand der Lasche hinter einer Außenkante des Schellenbandes greift. Dieser Haken dient dazu, die Lasche im Spannzustand am Schellenband zu fixieren, wodurch eine Lockerung der Lasche verhindert wird.

In einer bevorzugten Ausführungsform ist mindestens ein Ende des Schellenbandes mit einer den Abschluß des Schellenbandes bildenden Lasche mit einer sich in Längsrichtung und Querrichtung des Schellenbandes erstreckenden Öffnung versehen, wobei die Breite der Öffnung der Breite des anderen Endes des Schellenbandes entspricht. Diese Öffnung in dem als Lasche ausgebildeten einem Ende des Schellenbandes ermöglicht ein Hindurchführen des anderen Endes des Schellenbandes durch diese Öffnung. Hierdurch werden die beiden Enden beim Hindurchführen eines Endes durch die Öffnung des anderen Endes zum Spannen provisorisch gegeneinander festgelegt, wodurch zumindest ein seitliches Verrutschen der beiden Enden verhindert wird.

Vorteilhafterweise ist bei dieser Ausgestaltung die Öffnung durch die Flansche des einen Endes des Schellenbandes umrahmt. Hierdurch ergibt sich eine gute und ausreichende Stabilität des als Lasche ausgebildeten einen Endes des Schellenbandes.

Bevorzugterweise münden beide Enden des Schellenbandes in mit Öffnungen versehene Laschen. Diese Öffnungen in beiden Enden des Schellenbandes gestatten eine gute Handhabbarkeit der Kunststoffschelle derart, daß beide Enden des Schellenbandes durch die Öffnungen hintergriffen werden können, wodurch Werkzeuge zum Anziehen und Spannen der Kunststoffschelle einfach an den Öffnungen der Enden des Schellenbandes angesetzt werden können.

Bevorzugterweise besteht die Kunststoffschelle aus Polyamid 6 (PA-6E). Bei diesem Werkstoff handelt es sich um einen sehr zähen, auch in der Kälte harten Kunststoff, welcher eine große Härte, Steifheit, Abriebfestigkeit, Formbeständigkeit und Formbeständigkeit in der Wärme ausweist.

Weitere Vorteile und Ausgestaltungen der Erfindung werden anhand der nachfolgenden Zeichnung, der Beschreibung und der Patentansprüche beschrieben.

In der Zeichnung zeigt:
- Fig. 1: eine erste Ausführungsform einer erfindungsgemäßen Kunststoffschelle von oben,
- Fig. 2: die Kunststoffschelle aus Fig. 1 im Längsschnitt entlang der Linie A-A,
- Fig. 3: einen Querschnitt der Kunststoffschelle aus Fig. 1 entlang des Schnittes B-B,
- Fig. 4: einen Querschnitt durch die Kunststoffschelle aus Fig. 1 entlang des Schnittes C-C,
- Fig. 5: einen Querschnitt durch die Kunststoffschelle aus Fig. 1 entlang der Linie D-D,
- Fig. 6: eine Teilansicht der Kunststoffschelle aus Fig. 1 von oben,
- Fig. 7: einen Querschnitt der Kunststoffschelle aus Fig. 6 entlang der Linie E-E,
- Fig. 8: eine Prinzipskizze der Wicklung einer Lasche der Kunststoffschelle aus Fig. 6,
- Fig. 9: einen Querschnitt einer um ein Rohr herumgewickelten Kunststoffschelle gemäß Fig. 1,
- Fig. 10: eine zweite Ausführungsform einer erfindungsgemäßen Kunststoffschelle von oben,
- Fig. 11: einen Längsschnitt durch die Kunststoffschelle gemäß Fig. 10 entlang der Linie A-A,
- Fig. 12: einen Querschnitt durch die Kunststoffschelle aus Fig. 10 entlang der Linie D-D,
- Fig. 13: eine Teildarstellung der Kunststoffschelle aus Fig. 10 in Aufsicht,
- Fig. 14: einen Querschnitt durch die Kunststoffschelle aus Fig. 10 entlang der Linie E-E aus Fig. 13,
- Fig. 15: die Teilansicht einer dritten Ausführungsform der erfindungsgemäßen Kunststoffschelle von oben,
- Fig. 16: einen Querschnitt durch die Kunststoffschelle aus Fig. 15 entlang der Linie D-D,
- Fig. 17: die Teilansicht der Kunststoffschelle aus Fig. 15 von oben,
- Fig. 18: einen Querschnitt durch die Kunststoffschelle aus Fig. 15 entlang der Linie E-E aus Fig. 17,
- Fig. 19: eine Teilansicht einer vierten Ausführungsform der erfindungsgemäßen Kunststoffschelle von oben,
- Fig. 20: einen Querschnitt durch die Kunststoffschelle aus Fig. 19 entlang der Linie D-D,
- Fig. 21: die Teilansicht der Kunststoffschelle aus Fig. 19 von oben,
- Fig. 22: einen Querschnitt durch die Kunststoffschelle aus Fig. 19 entlang der Linie E-E aus Fig. 21,
- Fig. 23: die Teilansicht einer fünften Ausführungsform der erfindungsgemäßen Kunststoffschelle von oben,
- Fig. 24: einen Querschnitt durch die Kunststoffschelle aus Fig. 23 entlang der Linie A-A,
- Fig. 25: eine Lasche der Kunststoffschelle aus Fig. 23 von der Seite,
- Fig. 26: einen Querschnitt durch die Lasche aus Fig. 23 entlang der Linie A-A, und
- Fig. 27: die Teilansicht einer sechsten Ausführungsform der erfindungsgemäßen Kunststoffschelle von oben.

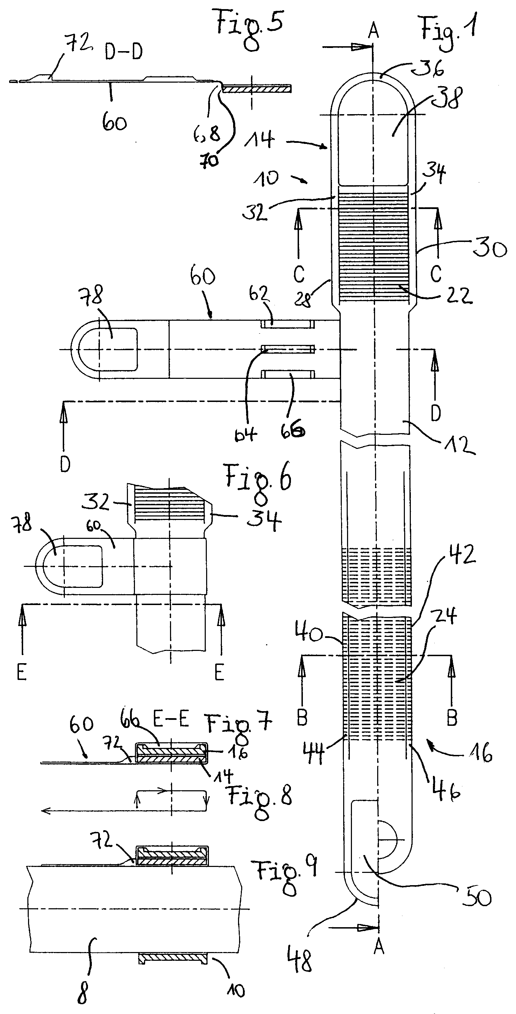

In den Fig. 1 - 9 ist ein erstes Ausführungsbeispiel einer erfindungsgemäßen Kunststoffschelle 10 dargestellt. Die Kunststoffschelle 10 besteht aus einem Schellenband 12 mit einem oberen Ende 14 und einen unteren Ende 16. Im Bereich der oberen Endes 14 ist das Schellenband 12 auf seiner Oberseite 18 mit einer quer zum Schellenband verlaufenden oberen Verzahnung 22 versehen. Das untere Ende 16 des Schellenbandes 12 ist an seiner Unterseite 20 mit einer unteren Verzahnung 24 versehen. Obere Verzahnung 22 und unteren Verzahnung 24 bilden zusammen eine Verzahnung 26.

Außenkanten 28 und 30 des oberen Endes 14 des Schellenbandes 12 sind mit nach oben ragenden Flanschen 32 und 34 versehen. Die Flansche 32 und 34 sind so miteinander verbunden, daß sie am oberen Ende 14 eine Lasche 36 mit einer Öffnung 38 bilden.

Ebenso ist das untere Ende 16 des Schellenbandes 12 im Bereich der unteren Verzahnung 24 an seinen Außenkanten 40 und 42 mit nach oben gerichteten Flanschen 44 und 46 versehen, welche am Ende des Schellenbandes 12 so miteinander verbunden sind, daß sie eine Lasche 48 mit einer Öffnung 50 bilden. Wie in Fig. 1 angedeutet, können Form und Durchmesser der Öffnung 50 variieren.

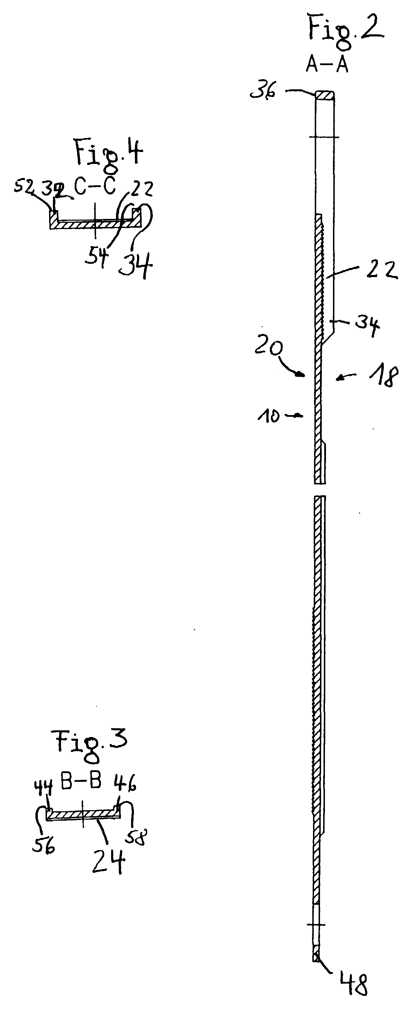

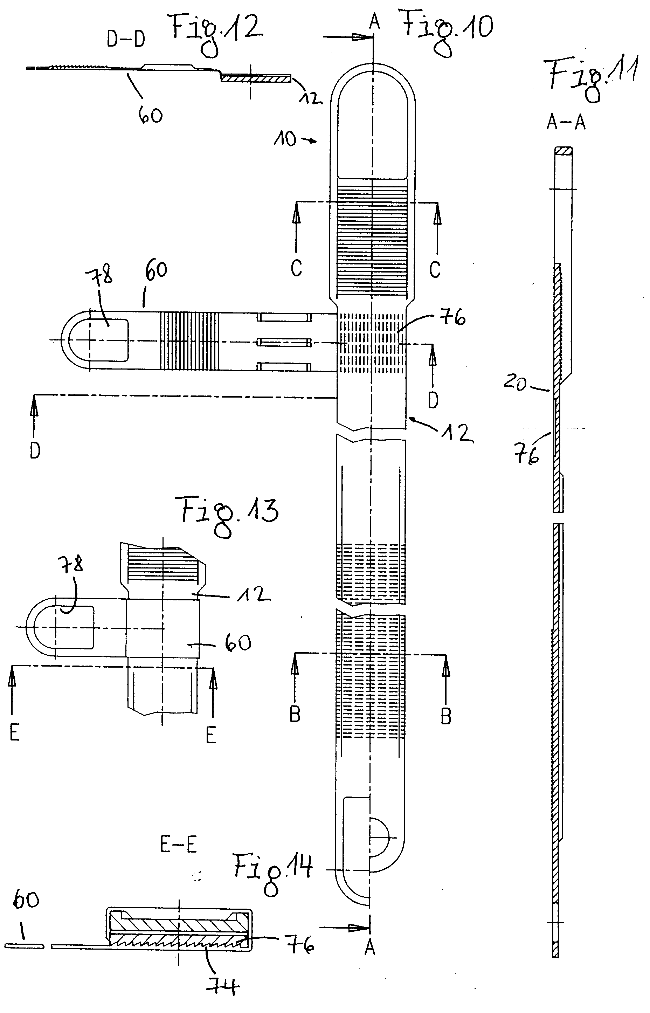

In den Fig. 3 und 4 sind Querschnitte durch den Bereich der oberen Flansche 32, 34 und der unteren Flansche 44, 46 dargestellt. Der äußere Abstand der Flansche 44, 46 entspricht dabei dem inneren Abstand der Flansche 32, 34.

Zum Verspannen der Kunststoffschelle 10 um zwei miteinander zu verbindenden Rohre wird zunächst die Kunststoffschelle 10 quer auf die zu verbindenden Rohre gelegt. Mittels der Lasche 48 wird das untere Ende 16 des Schellenbandes 12 der Kunststoffschelle 10 durch die Öffnung 38 der Lasche 36 des oberen Endes 14 des Schellenbandes 12 geführt und gegen das obere Ende 14 des Schellenbandes 12 angezogen. Hierdurch greift die untere Verzahnung 24 in die obere Verzahnung 22 ein. In diesem verspannten Zustand liegen die Flansche 44, 46 an den Flanschen 32, 34 des oberen Endes 14 des Schellenbandes 12 an, wobei obere Kanten 52, 54 der Flansche 32, 34 mit oberen Kanten 56, 58 der Flansche 44, 46 des unteren Endes 16 des Schellenbandes 12 fluchten. In diesem verspannten Zustand liegen die Flansche 44, 46 des unteren Endes 16 des Schellenbandes 12 eng an den Flanschen 32, 34 des oberen Endes 14 des Schellenbandes 12 an.

In diesem Zustand können die Flansche mit geeigneten Mitteln miteinander unlösbar verschweißt werden.

Sollte eine Verschweißung nicht möglich sein oder als nicht ausreichend erachtet werden, kann eine quer am Schellenband 12 angeformte Lasche 60 die Funktion eines Schlosses übernehmen. Diese in den Fig. 1 und 5 - 9 dargestellte Lasche 60 ist außerhalb des Bereichs der Verzahnung 26 am Schellenband 12 angeformt. In Fig. 8 ist schematisch dargestellt, wie die Lasche 60 vor dem eigentlichen Verspannen des Schellenbandes 12 um das Schellenband 12 herumgeführt wird.

Gemäß den Fig. 1, 5, 7 und 9 ist die Lasche 60 an ihrer Oberseite mit drei Stegen 62,64, 66 versehen, welche im gespannten Zustand der Lasche 60 und des Schellenbandes 12 auf die Oberseite des unteren Endes 16 des Schellenbandes 12 drücken, was insbesondere in den Fig. 7 und 9 dargestellt ist. Fig. 9 zeigt dabei die um ein Rohr 8 gespannte Kunststoffschelle 10.

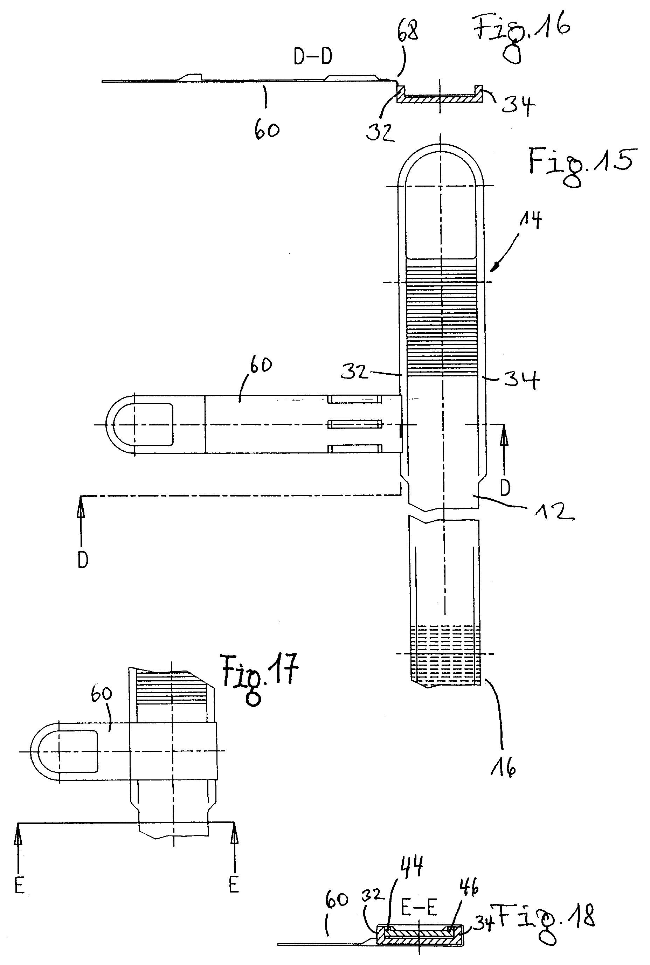

Gemäß Fig. 5 ist die Lasche 60 durch ein Filmscharnier 68 an einer Außenkante 70 des Schellenbandes 12 angeformt. Durch dieses Filmscharnier 68 wird ein Umschlaufen der Lasche 60 um das Schellenband 12 erleichtert.

An ihrer Oberseite ist die Lasche 60 ferner mit einem Haken 72 versehen, welcher im verspannten Zustand der Lasche 60 hinter die Außenkante 70 des Schellenbandes 12 greift und eine Lockerung der gegen das Schellenband 12 verspannten Lasche 60 verhindert.

In den Fig. 10 - 14 ist eine zweite Ausführungsform der erfindungsgemäßen Kunststoffschelle 10 dargestellt. Diese Kunststoffschelle 10 weist gegenüber der in den Fig. 1 - 9 dargestellten Kunststoffschelle eine Lasche 60 auf, welche an ihrer Oberseite mit einer quer zur Lasche 60 verlaufenden Verzahnung 74 versehen ist. Bei dieser Ausführungsform ist das Schellenband 12 im Bereich des Anschlusses mit der Lasche 60 auf seiner Unterseite 20 mit einer längs zum Schellenband verlaufenden Verzahnung 76 versehen.

In Fig. 14 ist dargestellt, daß nach dem Umschlaufen des Schellenbandes 12 mit der Lasche 60 die Verzahnung 74 der Lasche 60 in die Verzahnung 76 des Schellenbandes 12 eingreift und somit ein Lösen der Lasche 60 verhindert wird. Die Lasche 60 ist an ihrem dem Schellenband 12 abgewandten Ende, ebenso wie Kunststoffschelle 10 aus den Fig. 1 - 9, mit einer Öffnung 78 versehen, welche das Ansetzen eines Werkzeugs ermöglicht.

In den Fig. 15 - 18 ist eine dritte Ausführungsform der erfindungsgemäßen Kunststoffschelle 10 dargestellt. Bei dieser der in den Fig. 1 - 9 dargestellten Kunststoffschelle 10 ähnlichen Ausführungsform ist die Lasche 60 mittels eines Filmscharniers 68 an einen Flansch 32 des oberen Endes 14 des Schellenbandes 12 angeformt. Bei dieser in den Fig. 15 - 18 dargestellten Ausführungsform sind die Flansche 32, 34 gegenüber der in den Fig. 1 - 9 dargestellten Ausführungsform der Kunststoffschelle 10 länger, so daß die an dem Flansch 32 angeformte Lasche 60 im verspannten Zustand der Kunststoffschelle 10 die Flansche 32, 34 des oberen Endes 14 und die Flansche 44, 46 des unteren Endes 16 des Schellenbandes 12 überragt.

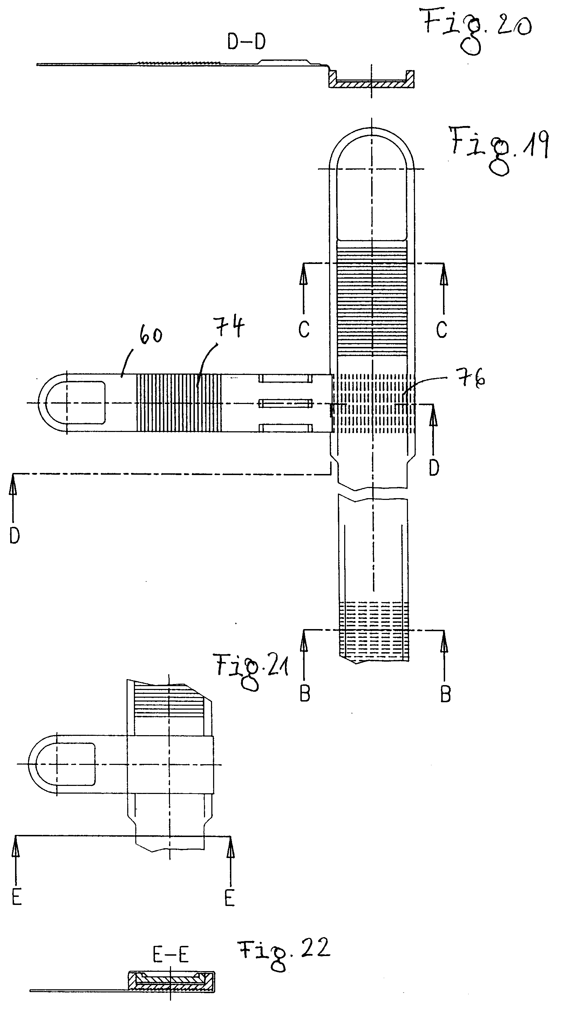

Eine vierte Ausführungsform der erfindungsgemäßen Kunststoffschelle 10 ist in den Fig. 19 - 22 dargestellt. Bei dieser Ausführungsform ist die Lasche 60, ebenso wie die Lasche 60 der in den Fig. 16 - 18 dargestellten Kunststoffschelle 10, am Flansch 32 des oberen Endes 14 des Schellenbandes 12 angeformt, wobei die Lasche 60 wie die in den Fig. 10 - 14 dargestellte Lasche 60 eine Verzahnung 74 aufweist, ebenso weist das Schellenband 12 der in den Fig. 19 - 22 dargestellten Kunststoffschelle 10 wie die in den Fig. 10 - 14 dargestellte Kunststoffschelle 10 eine Verzahnung 76 auf.

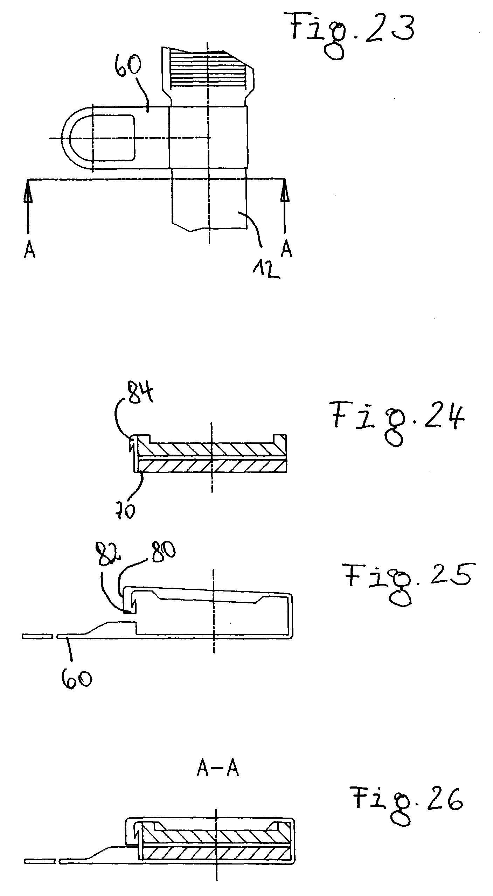

Eine fünfte Ausführungsform der erfindungsgemäßen Kunststoffschelle 10 ist in den Fig. 23 - 26 dargestellt. In dieser Ausführungsform ist die Lasche 60 lösbar mit dem Schellenband 12 verbindbar. Bei dieser Ausführungsform ist ein Ende 80 der Lasche 60 mit einem Haken 82 versehen, welcher in einen an einer Außenkante 70 des Schellenbandes 12 angeformten Haken 84 eingreift.

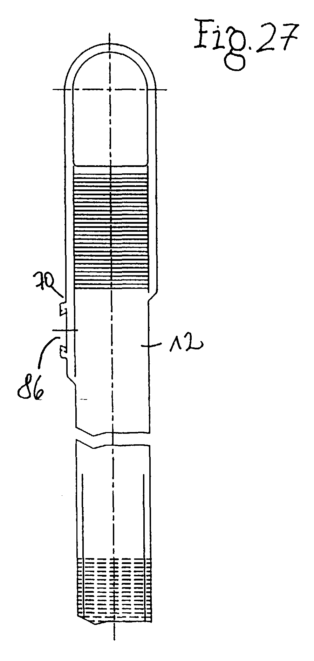

Eine sechste Ausführungsform der erfindungsgemäßen Kunststoffschelle 10 ist in Fig. 27 dargestellt. Hierbei ist eine Außenkante 70 des Schellenbandes 12 mit einer schwalbenschwanzförmigen Ausnehmung 86 versehen. Das dem Schellenband 12 zugewandte Ende 80 der in Fig. 27 nicht dargestellten Lasche 60 ist mit einem der schwalbenschwanzförmigen Ausnehmung 86 entsprechenden Schwalbenschwanz 88 versehen.

Die in den Fig. 23 - 26 und 27 dargestellten Ausführungsformen der erfindungsgemäßen Kunststoffschelle 10 bieten den Vorteil, daß die Lasche 60 nur dann mit dem Schellenband 12 verbunden werden muß, wenn eine Verschweißung der beiden Enden 14 und 16 der Kunststoffschelle 10 nicht ausreichend ist bzw. wenn ein Verschweißen nicht möglich ist.

## Patentansprüche

1. Kunststoffschelle (10) zum Einspannen zylindrischer Elemente, insbesondere von Rohren und dergleichen, mit einem Schellenband (12) mit einer quer zum Schellenband (12) auf dem Schellenband (12) angeordneten Verzahnung (26), wobei die Verzahnung (26) aus einer an einem Ende (14) des Schellenbandes (12) angeordneten oberen Verzahnung (22) und aus einer am anderen Ende (16) des Schellenbandes (12) angeordneten unteren Verzahnung (24) besteht, wobei das Schellenband (12) an seinen Außenkanten (28, 30; 40, 42) mindestens im Bereich einer Verzahnung (22; 24) mit die Verzahnung (26) überragenden, längs zum Schellenband (12) verlaufenden Flanschen (32, 34; 44, 46) versehen ist, und mit einem Schloß zur Sicherung der Verbindung von oberer und unterer Verzahnung (22, 24), durch welches die Verzahnung (26) festlegbar ist, **dadurch gekennzeichnet**, daß beide Enden (14, 16) des Schellenbandes (12) an ihren Außenkanten (28, 30; 40, 42) im Bereich der oberen Verzahnung (22) und der unteren Verzahnung (24) mit Flanschen (32, 34; 44, 46) versehen sind, welche sich nach oben erstrecken, wobei der äußere Abstand der Flansche (44, 46) an einem Ende (16) des Schellenbandes (12) dem inneren Abstand der Flansche (32, 34) am anderen Ende (14) des Schellenbandes (12) entspricht und wobei die Flansche (32, 34; 44, 46) beider Enden (14, 16) miteiannder verschweißbar sind.

2. Kunststoffschelle nach Anspruch 1, **dadurch gekennzeichnet**, daß obere Kanten (52, 54; 56, 58) der Flansche (32, 34; 44, 46) im verspannten Zustand der Kunststoffschelle (10) miteinander fluchten.

3. Kunststoffschelle (10) zum Einspannen zylindrischer Elemente, insbesondere von Rohren und dergleichen, mit einem Schellenband (12) mit einer quer zum Schellenband (12) auf dem Schellenband (12) angeordneten Verzahnung (26), wobei die Verzahnung (26) aus einer an einem Ende (14) des Schellenbandes (12) angeordneten oberen Verzahnung (22) und aus einer am anderen Ende (16) des Schellenbandes (12) angeordneten unteren Verzahnung (24) besteht, wobei das Schellenband (12) an seinen Außenkanten (28, 30; 40, 42) mindestens im Bereich einer Verzahnung (22; 24) mit die Verzahnung (26) überragenden, längs zum Schellenband (12) verlaufenden Flanschen (32, 34; 44, 46) versehen ist, und mit einem Schloß zur Sicherung der Verbindung von oberer und unterer Verzahnung (22, 24), durch welches die Verzahnung (26) festlegbar ist, **dadurch gekennzeichnet**, daß das Schloß aus einer sich quer zum Schellenband (12) erstreckenden Lasche (60) besteht, welche außerhalb, neben und parallel zur Verzahnung (26) und außerhalb der Flansche (32, 34; 44, 46) am Schellenband (12) angebracht ist, wobei die Lasche (60) die Verzahnung (26) in Radialrichtung sichert und wobei die Lasche (60) quer um das Schellenband (12) geführt ist.

4. Kunststoffschelle nach Anspruch 3, **dadurch gekennzeichnet**, daß die Lasche (60) mit mindestens einem Steg (62, 64, 66) versehen ist, welcher sich in Längsrichtung der Lasche (60) und quer zum Schellenband (12) erstreckt und welcher im Spannzustand der Lasche (60) über dem Schellenband (12) angeordnet ist.

5. Kunststoffschelle nach Anspruch 3 oder 4, **dadurch gekennzeichnet**, daß die Lasche (60) an ihrer Oberseite mit einer quer zur Lasche (60) verlaufenden Verzahnung (74) versehen ist, welche im Spannzustand der Lasche (60) mit einer an der Unterseite (20) des Schellenbandes (12) längs zum Schellenband (12) verlaufenden Verzahnung (76) im Eingriff ist.

6. Kunststoffschelle nach einem der Ansprüche 3 - 5, **dadurch gekennzeichnet**, daß die Lasche (60) durch ein Filmscharnier (68) mit dem Schellenband (12) verbunden ist.

7. Kunststoffschelle nach einem der Ansprüche 3 - 5, **dadurch gekennzeichnet**, daß die Lasche (60) lösbar mit dem Schellenband (12) verbunden ist.

8. Kunststoffschelle nach Anspruch 7, **dadurch gekennzeichnet**, daß die Lasche (60) an einem Ende (80) mit einem Haken (82) versehen ist, welcher in einen an einer Außenkante (70) des Schellenbandes (12) angeformten Haken (84) eingreift.

9. Kunststoffschelle nach Anspruch 7, **dadurch gekennzeichnet**, daß ein Ende (80) der Lasche (60) einen Schwalbenschwanz aufweist, welcher in eine an einer Außenkante (70) des Schellenbandes (12) angeformte schwalbenschwanzförmige Ausnehmung (86) eingreift.

10. Kunststoffschelle nach einem oder mehreren der Ansprüche 3 - 7, **dadurch gekennzeichnet**, daß die Lasche (60) an ihrer Oberseite mit mindestens einem Haken (72) versehen ist, welcher im Spannzustand der Lasche (60) hinter eine Außenkante (70) des Schellenbandes (12) greift.

11. Kunststoffschelle nach einem der Ansprüche 1 - 10, **dadurch gekennzeichnet**, daß mindestens ein Ende (14) des Schellenbandes (12) mit einer den Abschluß des Schellenbandes (12) bildenden Lasche (36) mit einer sich in Längsrichtung und Querrichtung des Schellenbandes (12) erstreckenden Öffnung (38) versehen ist, wobei die Breite der Öffnung (38) der Breite des anderen Endes (16) des Schellenbandes (12) entspricht.

12. Kunststoffschelle nach Anspruch 11, **dadurch gekennzeichnet**, daß die Öffnung (38) durch die Flansche (32, 34) des einen Endes (14) des Schellenbandes (12) umrahmt ist.

13. Kunststoffschelle nach einem der Ansprüche 1 - 10, **dadurch gekennzeichnet**, daß beide Enden (14, 16) des Schellenbandes (12) in mit Öffnungen (38; 50) versehene Laschen (36; 48) münden.

14. Kunststoffschelle nach einem der Ansprüche 1 - 13, **dadurch gekennzeichnet**, daß die Kunststoffschelle (10) aus PA/6E besteht.
